# EUROPÄISCHE PATENTSCHRIFT

(11) **EP 3 104 131 B1**
(45) Veröffentlichungstag und Bekanntmachung des Hinweises auf die Patenterteilung: **09.05.2018**
(21) Anmeldenummer: 16161579.4
(22) Anmeldetag: 22.03.2016
(51) Int. Cl.: G01D 11/30

(54) **BEFESTIGUNGSEINRICHTUNG FÜR EINEN SENSOR AN EINEM MONTAGEKÖRPER**
FIXING DEVICE FOR A SENSOR TO A MOUNTING BODY
DISPOSITIF DE FIXATION POUR UN CAPTEUR SUR UN CORPS DE MONTAGE

(30) Priorität: 10.06.2015 DE 102015109142
(43) Veröffentlichungstag der Anmeldung: 14.12.2016
(73) Patentinhaber: SICK AG, 79183 Waldkirch (DE)
(72) Erfinder: Behrens, Andreas, 40227 Düsseldorf (DE)

(56) Entgegenhaltungen:
- DE-A1-102012 021 891
- DE-A1-102013 113 537
- DE-U1-202010 002 817
- US-A1- 2014 200 093

## Beschreibung

Die Erfindung betrifft eine Befestigungseinrichtung für einen Sensor an einem Montagekörper, umfassend eine Schnellspanneinrichtung, welche den Montagekörper einklemmt.

In der Automatisierungstechnik ist es üblich, dass Sensoren an einer Montagestange befestigt werden. Dadurch werden die Sensoren räumlich genau dort montiert, wo sich das Objekt, welches durch den Sensor detektiert werden soll, befindet. Die Montagestange ist dabei Bestandteil eines Stangenhaltesystems, wobei die Montagestange ein Rundprofil aufweist.

Aus der DE 10 2013 113 537 A1 ist ein Halter zum Befestigen eines Sensors an einem Montagekörper bekannt, wobei der Halter mit einer Schnellspanneinrichtung versehen ist. Der Halter ist über ein Verbindungselement mit einer Sensorhalterung verbunden, wobei die Klemmkraft zwischen Halter und Sensor sowie zwischen Halter und Montagekörper unterschiedlich ist. Zum Befestigen und Lösen bzw. Nachjustieren des Sensors wird dabei mindestens ein Werkzeug benötigt.

Die DE 10 2012 021 891 A1 offenbart eine Vorrichtung zum Befestigen eines Sensorgehäuses an eine Stange mit zwei zueinander parallelen Klemmscheiben.

Die DE 10 2007 023 802 A1 offenbart ein Clamp-On Durchflussmessgerät zur Befestigung an einer Rohrleitung.

Die DE 20 2010 002 817 U1 offenbart eine Stangenhalterung zum Anordnen eines Sensors oder eines Reflektors an einer Stange.

Die US 2014 020 0093 A1 offenbart eine lösbare Befestigungsschelle mit einer Befestigungsschraube für eine Befestigung eines Sensors an einer Montagestange.

Der Erfindung liegt die Aufgabe zugrunde, eine Befestigungseinrichtung für einen Sensor an einem Montagekörper anzugeben, bei welchem sowohl die Montage als auch die Ausrichtung des Sensors einfach und ohne ein Werkzeug ausgeführt werden kann.

Erfindungsgemäß ist die Aufgabe dadurch gelöst, dass die Schnellspanneinrichtung an einem ersten Halteteil gelagert ist, welches mit einem zweiten, den Sensor tragenden Halteteil verbunden ist, wobei das erste und das zweite Halteteil eine Klemmeinrichtung bilden, wobei das erste Halteteil zwei Bügel umfasst, wobei mindestens ein Bügel eine Montagekörperauflageeinheit des zweiten Halteteils hintergreift und die Schnellspanneinrichtung zwischen den beiden Bügeln des ersten Halteteiles befestigt ist, wobei die Schnellspanneinrichtung an einer, die Bügel verbindenden Achse geführt bzw. drehbar gelagert ist.

Dies hat den Vorteil, dass der Sensor ohne Werkzeug mit allen Freiheitsgraden, wie Positionshöhe an der Montagestange, Drehung um die Montagestange und Neigung zur Montagestange, einfach montiert werden kann. Der Schnellspannmechanismus zwischen den zwei Halteteilen bewirkt dabei eine feste Position des Sensors. Eine solche Befestigungseinrichtung ist unabhängig von den verwendeten Materialien, was eine kostengünstige Herstellung ermöglicht. Auf Werkzeuge zur Montage kann verzichtet werden.

Dabei umfasst das erste Halteteil zwei Bügel, wobei mindestens ein Bügel eine Montagekörperauflageeinheit des zweiten Halteteils hintergreift. Durch dieses Hintergreifen lassen sich das erste und das zweite Halteteil in einem Arbeitsschritt einfach verbinden, wobei auf zusätzliche Bauteile zur Verfestigung der Verbindung verzichtet werden kann.

Gemäß der Erfindung ist die Schnellspanneinrichtung zwischen den beiden Bügeln des ersten Halteteils befestigt, wobei die Schnellspanneinrichtung an einer, die Bügel verbindenden Achse geführt bzw. drehbar gelagert ist. Somit wird auf zusätzliche Halteelemente, die die Schnellspanneinrichtung an dem ersten Halteteil befestigen, verzichtet. Die Lagerung der Schnellspanneinrichtung zwischen den Bügeln bildet dabei eine funktionsgünstige Position, da direkt unter der Schnellspanneinrichtung der Montagekörper eingelegt wird.

In einer Ausgestaltung ist die Montagekörperauflageeinheit mit einem Sensorträger verbunden. Durch eine feste Verbindung der Montagekörperauflageeinheit mit dem Sensorträger wird eine einfache, aber trotzdem robuste Einheit zur Befestigung des Sensors geschaffen.

In einer Ausführungsform ist der Sensor in den Sensorträger eingeclipst. Dazu weist der Sensorträger Fortsätze auf, die am Sensor angreifen und einfach in einem Montageschritt einführbar sind, wodurch der Befestigungsvorgang vereinfacht wird.

In einer Alternative ist der Sensor direkt an der Montagekörperauflageeinheit befestigt. Dies ist insbesondere immer dann möglich, wenn der Sensor seinerseits einen mechanischen Universalanschluss, zum Beispiel einen Schwalbenschwanz oder eine Bajonettbefestigung aufweist.

In einer Weiterbildung ist die Montagekörperauflageeinheit drehbar gelagert. Durch diese drehbare Lagerung kann die Montagekörperauflageeinheit beliebig in dem gewünschten Freiheitsgrad bewegt und somit der Sensor an der Montagestange in die gewünschte Richtung fixiert werden.

In einer weiteren Ausführungsform ist die Schnellspanneinrichtung als Hebelelement ausgebildet. Dadurch lässt sich durch eine einfache Betätigung die Befestigungseinrichtung an dem Montagekörper befestigen.

Damit die Schnellspanneinrichtung den Montagekörper nur allmählich beim Lösen der Schnellspanneinrichtung freigibt, ist die Achse der Schnellspanneinrichtung asymmetrisch zu einem Druckkörper der Schnellspanneinrichtung ausgebildet. Der Druckkörper liegt im geschlossenen Zustand der Schnellspanneinrichtung auf dem Montagekörper auf und wird beim Öffnen der Schnellspanneinrichtung von dem Montagekörper langsam abgehoben.

In einer Ausgestaltung weist die Schnellspanneinrichtung an einem freien Ende eine Sicherungsvorrichtung auf. Diese Sicherungsvorrichtung kann beispielsweise als Langloch ausgebildet sein, wodurch eine zusätzliche Sicherung der Schnellspanneinrichtung an dem Montagekörper über einen einfachen Kabelbinder möglich ist. Dadurch wird ein ungewolltes Öffnen der Schnellspanneinrichtung zuverlässig verhindert.

Die Erfindung lässt zahlreiche Ausführungsformen zu. Eine davon soll anhand der in der Zeichnung dargestellten Figuren näher erläutert werden.

Es zeigt:
- Fig. 1: ein Ausführungsbeispiel der erfindungsgemäßen Befestigungseinrichtung;
- Fig. 2: eine Draufsicht auf einen Sensorträger der Befestigungseinrichtung gemäß Fig. 1.

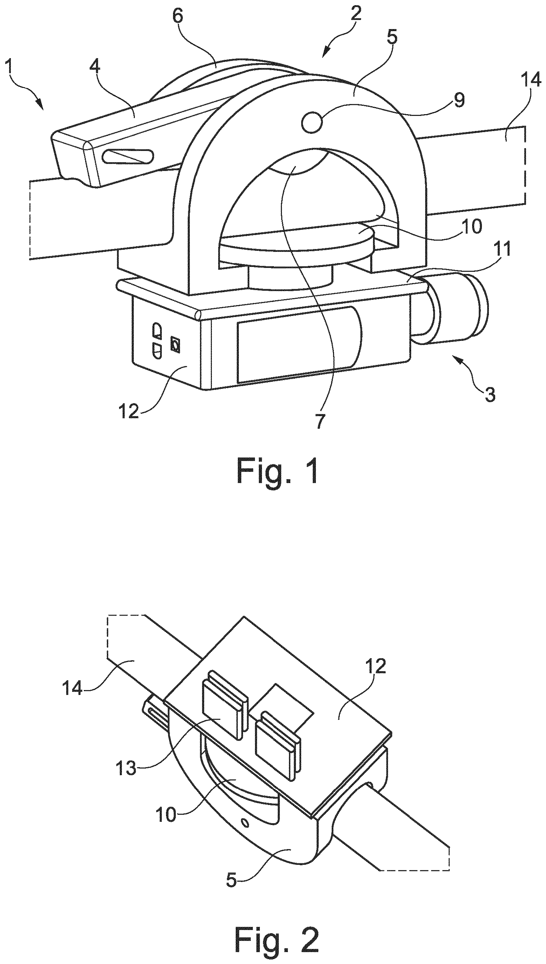

In Fig. 1 ist ein Ausführungsbeispiel der erfindungsgemäßen Befestigungseinrichtung 1 dargestellt, die aus zwei Halteteilen 2, 3 besteht. Das erste Halteteil 2 weist eine Schnellspanneinrichtung 4 auf, die als Hebeleinrichtung ausgebildet ist. Die Schnellspanneinrichtung 4 ist an einer Achse 9 geführt, die zwei Bügel 5, 6 des ersten Halteteils 2 der Schnellspanneinrichtung 4 verbindet. Die Bügel 5, 6 weisen nicht weiter dargestellte Öffnungen auf, in welche die Achse 9 der Schnellspanneinrichtung 4 eingeführt ist. Im Bereich der Achse 9 weist die Schnellspanneinrichtung 4 einen als Rundung ausgebildeten Druckkörper 7 auf. Mindestens ein Bügel 5 hintergreift dabei eine drehbar gelagerte Montagekörperauflageeinheit 10 des zweiten Halteteiles 3, indem der Bügel 5 zwei um 90° zum Bügel 5 abgewinkelte Vorsprünge aufweist. Das erste Halteteil 2 kann dabei so konstruiert sein, dass das zweite Halteteil 3 nur von einer Seite her in das erste Halteteil 2 eingeschoben werden kann. Darüber hinaus kann das erste Halteteil 2 so aufgebaut sein, dass das zweite Halteteil 3 nach dem Einschieben leicht nach unten einrastet, wodurch es einfacher verdreht werden kann.

Die Achse 9 kann alternativ aus einem anderen Werkstoff sein als die Schnellspanneinrichtung 4. So kann die Achse 9 aus Metall bestehen, während die Schnellspanneinrichtung 4 aus Kunststoff hergestellt ist.

Die drehbar gelagerte Montagekörperauflageeinheit 10 ist Bestandteil des zweiten Halteteils 3 und ist fest mit einem Sensorträger 11 verbunden. An dem Sensorträger 11 ist der Sensor 12 befestigt.

Wie aus Fig. 2 ersichtlich, in welcher eine Draufsicht auf den Sensorträger 11 von unten dargestellt ist, sind an dem Sensorträger 12 zwei Rastvorsprünge 13 angeordnet, in welche der Sensor 12 eingeclipst wird. Die mechanische Befestigung des Sensors 12 erfolgt dabei durch Einrasten des Sensors 12 auf den für den Sensor 12 konstruierten Sensorträger 11. Dies kann jeweils für einen bestimmten Sensortyp differenziert ausgestaltet werden.

Der Sensorträger 11 ist nicht erforderlich, wenn der Sensor 12 bereits einen mechanischen Universalanschluss, wie z. B. einen Schwalbenschwanz oder eine Bajonettbefestigung aufweist. In diesem Fall kann der Sensor 12 direkt an die Montagekörperauflageeinheit 10 befestigt werden.

Bei geöffneter Schnellspanneinrichtung 4 wird der Montagekörper 14 zwischen die beiden Bügel 5, 6 des ersten Halteteiles 2 eingeschoben und anschließend die Schnellspanneinrichtung 4 geschlossen, wobei der Druckkörper 7 der Schnellspanneinrichtung 4 den Montagekörper 14 gegen die Montagekörperauflageeinheit 10 drückt. Dabei wird der Montagekörper 14 zwischen dem ersten und zweiten Halteteil 2, 3 festgeklemmt. Wird die Schnellspanneinrichtung 4 nach oben gelöst, so wird der Montagekörper 14 mehr und mehr freigegeben, da die Achse 9 der Schnellspanneinrichtung 4 zu dem Druckkörper 7, die auf den Montagekörper 14 drückt, asymmetrisch angeordnet ist. Im gelösten Zustand kann das zweite Halteteil 3 auf Grund der drehbaren Lagerung des Montagekörperhalteteiles 10 in eine beliebig gewünschte Position gedreht werden.

Für die Achse 9 des Schnellspannkörpers 10 können in den Bügeln 5, 6 alternative, nicht weiter dargestellte Bohrungen vorgesehen sein, um zum Beispiel auch Montagekörper 14 mit kleinerem Durchmesser festklemmen zu können.

Bei der Montage des ersten Halteteils (2) ist es vorteilhaft, wenn die Schnellspanneinrichtung (4) erst nach dem Umgreifen des Montagekörpers (14) mit der Achse (9) verbunden werden kann. Dazu ist die Achse idealer Weise als steckbare Achse an einem Ende mit einem nicht dargestellten Kopf versehen, die ein Durchrutschen der Achse (9) im nicht geklemmten Zustand der Befestigungseinrichtung, verhindert. Damit kann das Halteteil (2) mit zwei Bügeln (5, 6) auch dann an einem Montagekörper 14 befestigt werden, wenn dieser bereits mit anderen Komponenten oberhalb bzw. unterhalb bestückt ist und ein Aufschieben des Halteteils (2) nicht mehr möglich ist.

Mittels der beschriebenen Lösung ist eine Befestigungseinrichtung für einen Sensor dargestellt, welche ohne zusätzliches Werkzeug betätigt werden kann. Dadurch werden Montagezeiten reduziert. Die Befestigungseinrichtung kann dabei kostengünstig komplett aus Kunststoff hergestellt werden.

## Patentansprüche

1. Befestigungseinrichtung für einen Sensor an einem Montagekörper, umfassend ein erstes und ein zweites Halteteil, sowie eine Schnellspanneinrichtung (4), welche den Montagekörper (14) einklemmt, wobei die Schnellspanneinrichtung (4) an dem ersten Halteteil (2) gelagert ist, welches mit dem zweiten, den Sensor (12) tragenden Halteteil (3) verbunden ist, wobei das erste und das zweite Halteteil (2, 3) eine Klemmeinrichtung bilden, wobei das erste Halteteil (2) zwei Bügel (5, 6) umfasst, wobei mindestens ein Bügel (5) eine Montagekörperauflageeinheit (10) des zweiten Halteteils (3) hintergreift und die Schnellspanneinrichtung (4) zwischen den beiden Bügeln (5, 6) des ersten Halteteiles (2) befestigt ist, wobei die Schnellspanneinrichtung (4) an einer, die Bügel (5, 6) verbindenden Achse (9) geführt oder drehbar gelagert ist, **dadurch gekennzeichnet, dass** die Montagekörperauflageeinheit (10) drehbar gelagert ist.

2. Befestigungseinrichtung nach Anspruch 1, **dadurch gekennzeichnet, dass** die Montagekörperauflageeinheit (10) mit einem Sensorträger (11) verbunden ist, in den der Sensor (12) einclipsbar ist.

3. Befestigungseinrichtung nach Anspruch 1, **dadurch gekennzeichnet, dass** der Sensor (12) direkt an der Montagekörperauflageeinheit (10) befestigt ist.

4. Befestigungseinrichtung nach Anspruch 1, **dadurch gekennzeichnet, dass** die Achse (9) an einem Ende mit einem Kopf versehen ist, der ein Durchrutschen der Achse (9) verhindert.

5. Befestigungseinrichtung nach mindestens einem der vorhergehenden Ansprüche, **dadurch gekennzeichnet, dass** die Schnellspanneinrichtung (4) als Hebelelement ausgebildet ist.

6. Befestigungseinrichtung nach mindestens einem der vorhergehenden Ansprüche, **dadurch gekennzeichnet, dass** die Achse (9) der Schnellspanneinrichtung (4) asymmetrisch zu einem Druckkörper (7) der Schnellspanneinrichtung (4) ausgebildet ist.

7. Befestigungseinrichtung nach mindestens einem der vorhergehenden Ansprüche, **dadurch gekennzeichnet, dass** die Schnellspanneinrichtung (4) an einem freien Ende eine Sicherungsvorrichtung aufweist.

## Claims

1. A fastening device for a sensor at a fitting comprising a first holding part and a second holding part as well as a quick clamping mechanism (4) which clamps the fitting (14), wherein the quick clamping mechanism (4) is supported at the first holding part (2) which is connected to the second holding part (3) which supports the sensor (12), with the first holding part and the second holding part (2, 3) forming a clamping device, wherein the first holding part (2) comprises two hoops (5, 6), wherein at least one hoop (5) engages behind a fitting support unit (10) of the second holding part (3) and the quick clamping mechanism (4) is fastened between the two hoops (5, 6) of the first holding part (2), wherein the quick clamping mechanism (4) is led or rotatably supported at an axle (9) which connects the hoops (5, 6), **characterized in that** the fitting support unit (10) is rotatably mounted.

2. A fastening device in accordance with claim 1, **characterized in that** the fitting support unit (10) is connected to a sensor carrier (11) into which the sensor (12) can be clipped.

3. A fastening device in accordance with claim 1, **characterized in that** the sensor (12) is directly fastened to the fitting support unit (10).

4. A fastening device in accordance with claim 1, **characterized in that** the axle (9) is provided with a head at one end, said head preventing a sliding through of the axle (9).

5. A fastening device in accordance with at least one of the preceding claims, **characterized in that** the quick clamping mechanism (4) is configured as a lever element.

6. A fastening device in accordance with at least one of the preceding claims, **characterized in that** the axle (9) of the quick clamping mechanism (4) is formed asymmetrically to a pressing member (7) of the quick clamping mechanism (4).

7. A fastening device in accordance with at least one of the preceding claims, **characterized in that** the quick clamping mechanism (4) has a securing device at a free end.

## Revendications

1. Dispositif de fixation d'un capteur sur un corps de montage, comportant une première et une seconde partie de retenue ainsi qu'un moyen de serrage rapide (4) qui vient coincer le corps de montage (14), le moyen de serrage rapide (4) étant monté sur la première partie de retenue (2) qui est reliée à la seconde partie de retenue (3) portant le capteur (12),
dans lequel la première et la seconde partie de retenue (2, 3) constituent un moyen de coincement, la première partie de retenue (2) comprend deux anses (5, 6), au moins une anse (5) engage par l'arrière une unité de support de corps de montage (10) de la seconde partie de retenue (3), et le moyen de serrage rapide (4) est fixé entre les deux anses (5, 6) de la première partie de retenue (2), le moyen de serrage rapide (4) est guidé ou monté de façon mobile en rotation sur un axe (9) reliant les anses (5, 6), **caractérisé en ce que** l'unité de support de corps de montage (10) est montée mobile en rotation.

2. Dispositif de fixation selon la revendication 1, **caractérisé en ce que** l'unité de support de corps de montage (10) est reliée à un porte-capteur (11) dans lequel peut s'encliqueter le capteur (12).

3. Dispositif de fixation selon la revendication 1, **caractérisé en ce que** le capteur (12) est fixé directement sur l'unité de support de corps de montage (10).

4. Dispositif de fixation selon la revendication 1, **caractérisé en ce que** à une extrémité, l'axe (9) est pourvu d'une tête qui empêche un patinage de l'axe (9).

5. Dispositif de fixation selon l'une au moins des revendications précédentes, **caractérisé en ce que** le moyen de serrage rapide (4) est réalisé sous forme d'élément formant levier.

6. Dispositif de fixation selon l'une au moins des revendications précédentes, **caractérisé en ce que** l'axe (9) du moyen de serrage rapide (4) est réalisé de façon asymétrique par rapport à un corps de pression (7) du moyen de serrage rapide (4).

7. Dispositif de fixation selon l'une au moins des revendications précédentes, **caractérisé en ce que** à une extrémité libre, le moyen de serrage rapide (4) comprend un moyen de blocage.
